# EUROPÄISCHE PATENTANMELDUNG

(11) **EP 4 198 322 A1**
(43) Veröffentlichungstag der Anmeldung: **21.06.2023**
(21) Anmeldenummer: 21214797.9
(22) Anmeldetag: 15.12.2021
(51) Int. Cl.: F16B 2/18, F16B 5/06, F16B 12/20, F16B 21/02

(54) **DREHVERBINDER**

(71) Anmelder: Erbe Elektromedizin GmbH, 72072 Tübingen (DE)
(72) Erfinder: DUEPPUIS, Martina, 72124 Pliezhausen (DE)
(74) Vertreter: Rüger Abel Patentanwälte PartGmbB

(57) **Zusammenfassung**

Eine erfindungsgemäße Verbindungseinrichtung (12) dient zur Kopplung zweier übereinander anzuordnenden Geräte (10, 11) oder zur Kopplung eines Geräts (10) mit einem Geräteträger (55). Die Geräteverbindungseinrichtung umfasst wenigstens zwei Drehankerkupplungen. Bevorzugt werden die beiden Drehankerkupplungen um eine Einhängevorrichtung ergänzt, so dass die drei Kupplungsmittel vorzugsweise in einer horizontalen oder in einer geneigten Ebene angeordnet sind. Die Einhängevorrichtung arbeitet nach dem Prinzip Haken/Öse, während die Drehankerkupplungen eine formschlüssige Verriegelung erbringen, indem ein unrunder Drehanker in eine Ankerfassung axial eingeführt und durch Drehung gesichert wird. Diese Verbindung ist einfach herzustellen und zu lösen und außerdem sehr erschütterungsfest.

## Beschreibung

Die Erfindung betrifft eine Geräteverbindungseinrichtung, insbesondere zur Verbindung elektromedizinischer Geräte untereinander oder zur Verbindung eines elektromedizinischen Geräts mit einem Geräteträger, beispielsweise in Gestalt eines Tischs oder Wagens. Weiter betrifft die Erfindung ein Gerät sowie einen Geräteträger.

Aus der US 2016/0228082 A1 ist ein Gerätesystem bekannt, zu dem ein als Geräteträger ausgebildeter Wagen gehört. An diesen Wagen ist ein Tisch zur Aufnahme eines Patienten anschließbar. Zur Verbindung des Wagens mit dem Tisch ist ein Kupplungssystem vorgesehen, das drehbare Riegel umfasst.

Die US 6 938 966 B1 offenbart ein Verbindungssystem zur Verbindung verschiedener Schränke untereinander. Dazu sind in den Seitenwänden der Schränke Taschen ausgebildet. Während in einen der Schränke in den betreffenden Taschen Einsätze mit einem schlüssellochförmigen Aufnahmeschlitz befestigt werden, werden in den Taschen der Seitenwand des anderen Schranks Einsätze mit einem nagelkopfartigen Vorsprung eingesetzt. Die Vorsprünge passen in die schlüssellochförmigen Aufnahmen und werden in diese einfach eingehängt.

Ein weiteres Verbindungssystem ist aus der EP 2 209 561 B1 bekannt. Dort wird ein System mit einem Drehverbinder vorgeschlagen, der mittig einen Sechskant aufweist. Von dem Sechskant erstrecken sich nach beiden Seiten konzentrisch zueinander zylindrische Fortsätze mit jeweils einer radial abstehenden Nase. Die miteinander zu verbindenden beiden Komponenten weisen jeweils eine kreisförmige Öffnung zur Aufnahme des zylindrischen Fortsatzes auf, wobei jede der Öffnungen einen zusätzlichen radial gerichteten Ausschnitt aufweist, durch den die Nase des Zylinders passt. Auf diese Weise kann der Drehverbinder in die Öffnung eingesetzt und durch Drehen verriegelt werden.

Es ist Aufgabe der Erfindung, eine Geräteverbindungseinrichtung zu schaffen, mit dem sich Geräte untereinander oder auch ein Gerät und ein Geräteträger schnell sicher und auf einfache Weise miteinander verbinden und bedarfsweise voneinander trennen lassen. Weiter ist es Aufgabe der Erfindung, ein Gerät und einen Geräteträger zu schaffen, die sich bedarfsweise miteinander verbinden und voneinander trennen lassen.

Diese Aufgaben werden mit der Geräteverbindungseinrichtung nach Anspruch 1, dem Gerät nach Anspruch 13 und dem Gerät oder dem Geräteträger nach Anspruch 15 gelöst:

Die erfindungsgemäße Geräteverbindungseinrichtung kann insbesondere zur Verbindung elektromedizinischer Geräte untereinander oder zur Verbindung elektromedizinischer Geräte mit einem Geräteträger eingesetzt werden. Zu der Geräteverbindungseinrichtung gehören eine erste und eine zweite Drehankerkupplung, die jeweils um individuelle Achsen drehbar sind und zum Beispiel an dem Boden eines Geräts, angeordnet sind. Die Drehankerkupplungen weisen Drehanker auf, die so angeordnet sind, dass ihre beiden Achsen parallel und in einem Abstand zueinander liegen. Zu der Geräteverbindungseinrichtung kann weiter eine Einhängevorrichtung gehören, die in Abständen sowohl zu der ersten Drehankerkupplung, als auch zu der zweiten Drehankerkupplung angeordnet ist.

Mit der erfindungsgemäßen Geräteverbindungseinrichtung kann ein Gerät an ein anderes Gerät oder an einen Geräteträger mit wenigen einfachen Handgriffen und ohne Gefahr für das Gerät angeschlossen werden. Dies gilt insbesondere auch für schwerere Geräte, die auf keinen Fall während des Ankopplungsprozesses abrutschen und herabfallen dürfen. Dank der Einhängevorrichtung ist das Gerät schon vor der festen Kopplung einigermaßen sicher aufgenommen und gehalten, so dass es unmittelbar nach dem Absetzen auf einem anderen Gerät oder Geräteträger schon gesichert ist. Die Drehankerkupplungen vollenden dann den Verbindungsvorgang und schaffen eine rüttelfeste Verbindung.

Die Einhängevorrichtung und die Drehankerkupplungen sind in Abständen zueinander angeordnet. Dies ergibt eine Dreipunktaufhängung, die einfach herzustellen und dabei sicher ist. Insbesondere gestattet die Einhängevorrichtung nach dem Einhängen eine Schwenkbewegung des Geräts, um die Einhängevorrichtung herum, so dass die Drehanker der Drehankerkupplungen leicht in die zugehörigen Ankerfassungen finden.

Die Drehanker sind vorzugsweise jeweils mit einem Schwenkhebel versehen, wobei die Schwenkhebel Griffabschnitte aufweisen, die zur manuellen Drehung des jeweiligen Drehankers dienen. Auf diese Weise können die Drehankerkupplungen werkzeuglos betätigt werden. Außerdem sind die Schwenkhebel und Griffe der Drehanker vorzugsweise wenigstens so lang, dass sie den Geräteboden überragen und somit auch dann manuell zugänglich sind, wenn das Gerät mit einem anderen Gerät oder einem Geräteträger gekuppelt wird. Die Griffe ragen dann aus dem zwischen dem Boden des Geräts und der Trägerfläche des anderen Geräts oder Geräteträgers gebildeten Spalt heraus.

Die beiden Drehanker sind zwischen einer Verriegelungsposition und einer Freigabeposition drehbar. Die Freigabeposition und die Verriegelungsposition sind um eine Drehung vorzugsweise um weniger als 180° voneinander beabstandet, beispielsweise eine Drehung um 110°, 90° oder 60° oder irgendeinen Wert zwischen diesen Angaben. Damit kann sichergestellt werden, dass der Griff des Hebels sowohl in Verriegelungsposition, als auch in Freigabeposition manuell zugänglich bleibt, weil er den Boden des Geräts überragt.

Die Griffabschnitte der beiden Schwenkhebel sind an den Drehankern vorzugsweise derart ausgerichtet, dass sie in Freigabeposition parallel zueinander orientiert sind. In Verriegelungsposition sind sie vorzugsweise parallel oder antiparallel zueinander orientiert. Damit ist für den Bediener jeweils leicht erkennbar, ob die Drehanker in einer zum Ankoppeln des Geräts an ein anderes Gerät oder an einen Geräteträger geeigneten Position stehen oder nicht. Weiter ist leicht erkennbar, ob eine Verriegelung vorgenommen wurde oder nicht.

Die Drehanker weisen vorzugsweise jeweils ein Sperrglied auf, dessen Umriss von einem konzentrisch zu der Drehachse des Drehankers liegenden Kreis abweicht. Das Sperrglied kann mindestens einen, vorzugsweise aber zwei radial von einer Nabe abstehende Flügel beinhalten. Diese Flügel (oder jede andere nichtkreisförmige Form) dienen zum Verriegeln des Sperrglieds und somit des Drehankers in einer zugeordneten Drehankerfassung. Zum Beispiel können die beiden Flügel in einem Winkel von 180° diametral zueinander von einer Nabe des Drehankers abstehen und somit insgesamt einen ovalen Umriss bilden. Als Ankerfassung kann dann beispielsweise eine in einem Blech oder in einer Platte ausgebildete Öffnung dienen, hinter deren Rand das Sperrglied schwenkbar ist. Die Öffnung kann eine nichtkreisförmige, bspw. längliche, z.B. ovale Öffnung (ein Langloch) sein, die bzw. das in einer Geräteoberseite oder in einem Geräteträger ausgebildet ist. Prinzipiell können die Öffnung und das Sperrglied aber auch eine Kreisform aufweisen, sofern dieser Kreis zu der Drehachse des Sperrgliedes exzentrisch angeordnet ist.

Vorzugsweise sind die beiden länglichen Öffnungen, die die beiden Ankerfassungen bilden oder zu diesen gehören, um einen Winkel gegeneinander verdreht. Dieser Winkel kann beispiels- und vorzugsweise 90° betragen. Dadurch wird eine statisch nicht überbestimmte klapperfreie und rüttelfeste Verbindung zwischen dem Gerät und dem aufnehmenden Gerät oder Geräteträger erreicht.

Die Einhängeeinrichtung umfasst vorzugsweise ein Einhängeglied und ein Aufnahmeglied, wobei das Aufnahmeglied eine Aufnahmegasse aufweist, die in Richtung auf eine die Drehankerkupplungen verbindende Linie orientiert ist. Die Aufnahmegasse weist ein offenes und ein geschlossenes Ende auf. Das geschlossene Ende ist, wenn das Aufnahmeglied an der Oberseite des unteren Geräts oder Gestells angeordnet ist, vorzugsweise an demjenigen Ende der Aufnahmegasse angeordnet, das den Drehankerkupplungen oder einer diese verbindenden Linie zugewandt ist. Bei Anordnung auf einer Schrägfläche ist das geschlossene Ende vorzugsweise das in Gefällerichtung untere Ende. Alternativ kann das geschlossene Ende der Aufnahmegasse an dem von einer solchen Linie weg weisenden Ende der Aufnahmegasse angeordnet sein. Dies insbesondere, wenn das Aufnahmeglied an der Unterseite des oberen Geräts montiert ist. Beide Ausgestaltungen gestatteten eine besonders intuitive Bedienung und eignen sich insbesondere auch dann, wenn das Gerät auf einer pultförmigen Aufnahmefläche zu montieren ist, die ein Gefälle zu der Geräterückseite hin hat. Die Einhängeeinrichtung ist vorzugsweise in einem vom Bediener fernliegenden Bereich der Aufnahmefläche angeordnet, während die Ankerfassungen in einem dem Bediener naheliegenden Bereich angeordnet sind. Hängt der Bediener das Gerät in die Einhängeeinrichtung ein, kann es von der pultförmigen Aufnahmefläche nicht mehr abrutschen und ist insoweit bereits temporär sicher aufgenommen.

Bei dem erfindungsgemäßen Gerät sind an seinem Boden die beiden Drehanker und entweder ein Einhängeglied oder ein Aufnahmeglied angeordnet. Die Drehanker und das Einhängeglied oder das Aufnahmeglied bilden jeweils eine Hälfte der drei Kupplungen der Geräteverbindungseinrichtung. Die ersten beiden Kupplungen werden durch die erste und die zweite Drehankerkupplung gebildet, während die dritte Kupplung durch die Einhängevorrichtung gebildet wird. Die Drehanker und das Einhängeglied oder Aufnahmeglied sind in Bezug aufeinander vorzugsweise in einem Dreieck angeordnet. Besonders bevorzugt ist eine Anordnung in einem gleichschenkeligen Dreieck, wobei die beiden gleich langen Schenkel jeweils von einer Drehankerkupplung und der Einhängevorrichtung gebildet werden.

An einem zur Erfindung gehörenden Geräteträger oder einem zum Stapeln hin vorgesehenes Gerät kann an der jeweiligen Oberseite die erste und die zweite Ankerfassung, sowie ein Einhängeglied oder ein Aufnahmeglied vorgesehen sein, die zusammen wiederum ein Dreieck bilden. Dieses Dreieck stimmt mit dem Dreieck der Drehanker und des Einhänge- oder Aufnahmeglieds eines darauf aufzustapelnden Geräts überein.

Mit der Erfindung ist ein Verbindungssystem geschaffen, mit dem sich Geräte im OP-Saal sicher untereinander oder mit einem Geräteträger verbinden lassen, um einen Stapel oder Turm zu bilden, der auch versehentlichen Stößen oder anderen Belastungen standhält, wie sie in Notsituationen im Operationssaal oder beim Bewegen des Geräteträgers auftreten können.

Weitere Einzelheiten vorteilhafter Ausführungsformen der Erfindung gehen aus den Zeichnungen sowie der zugehörigen Beschreibung und Unteransprüchen hervor. Es zeigen:
Figur 1 zwei stapelbare Geräte mit erfindungsgemäßer Geräteverbindungseinrichtung in perspektivischer Darstellung,
Figur 2 einen ersten Drehanker, in perspektivischer schematischer Darstellung,
Figur 3 einen zweiten Drehanker, in schematischer perspektivischer Darstellung,
Figur 4 ein Einhängeglied, in schematischer Darstellung,
Figur 5 ein Aufnahmeglied, in perspektivischer schematischer Darstellung,
Figur 6 ein erfindungsgemäßes Gerät und ein zugehöriger Geräteträger, jeweils in schematisierter perspektivischer Darstellung.

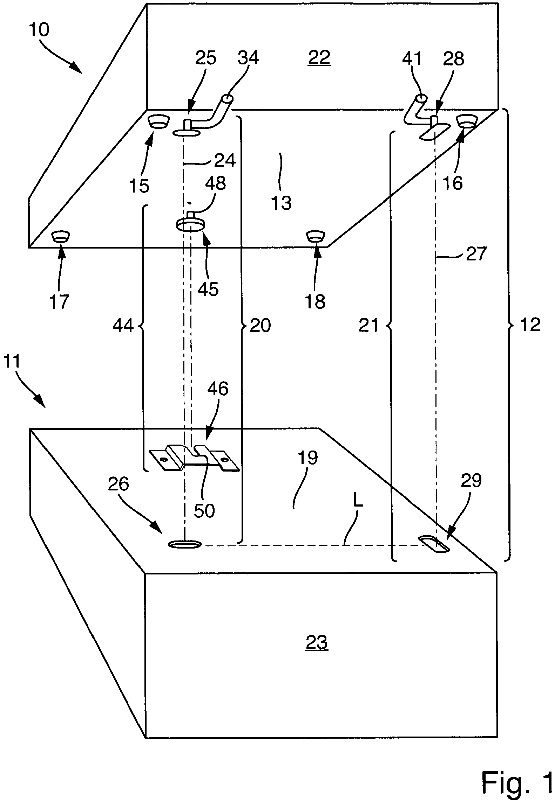

In Figur 1 sind zwei medizinische Geräte 10, 11 veranschaulicht, denen eine Geräteverbindungseinrichtung 12 zugeordnet ist, um die beiden Geräte 10, 11 miteinander koppeln zu können. Die medizinischen Geräte 10, 11 können Geräte zur Versorgung medizinischer Instrumente mit Strom, Spannung, Betriebsmedien wie Kryofluiden, Spülmedien, Gasen und dergleichen mehr sein.

Das Gerät 10 weist einen Geräteboden 13 mit daran angeordneten Gerätefüßen 15, 16, 17, 18 auf. Die Gerätefüße 15 bis 18 sind vorzugsweise rand- und eckennah angeordnet und gestatten es, das Gerät 10, auf der zum Beispiel ebenen Oberseite 19 des unteren medizinischen Geräts 11 aufzustellen. Die Geräte 10 und 11 können dabei gleiche oder auch leicht unterschiedliche Umrisse aufweisen.

Die Geräteverbindungseinrichtung 12 umfasst eine erste Drehankerkupplung 20, sowie eine zweite Drehankerkupplung 21, die beide vorzugsweise nahe der Geräterückseiten 22, 23 an dem Boden 13 und an der Oberseite 19 der beiden Geräte 10, 11 angeordnet sind. Alternativ können sie auch nahe den Vorderseiten oder nahe der Flanken der Geräte 10, 11 angebracht sein.

Zu der ersten Drehankerkupplung 20 gehört ein um eine erste Achse 24 drehbar an dem Boden 13 angeordneter Drehanker 25 und eine dieser zugeordneten Ankerfassung 26, die an der Oberseite 19 des unteren Geräts 11 angeordnet ist.

Ebenso gehört zu der zweiten Drehankerkupplung 21, ein um eine zweite Achse 27 drehbar gelagerter zweiter Drehanker 28, dem eine zweite, in der Oberseite 19 des zweiten Geräts 11 angeordnete zweite Drehankerfassung 29 zugeordnet ist.

Die Drehachsen 24, 27 sind parallel zueinander orientiert und in einem Abstand angeordnet. Vorzugsweise sind die beiden Drehanker 25, 28 in Nachbarschaft der Gerätefüße 15, 16 angebracht. Die beiden Drehachsen 24, 27 sind vorzugsweise senkrecht zu dem Geräteboden 13 und somit auch senkrecht zu der Oberseite 19 orientiert, zumindest wenn das Gerät 10 auf das Gerät 11 aufgesetzt ist.

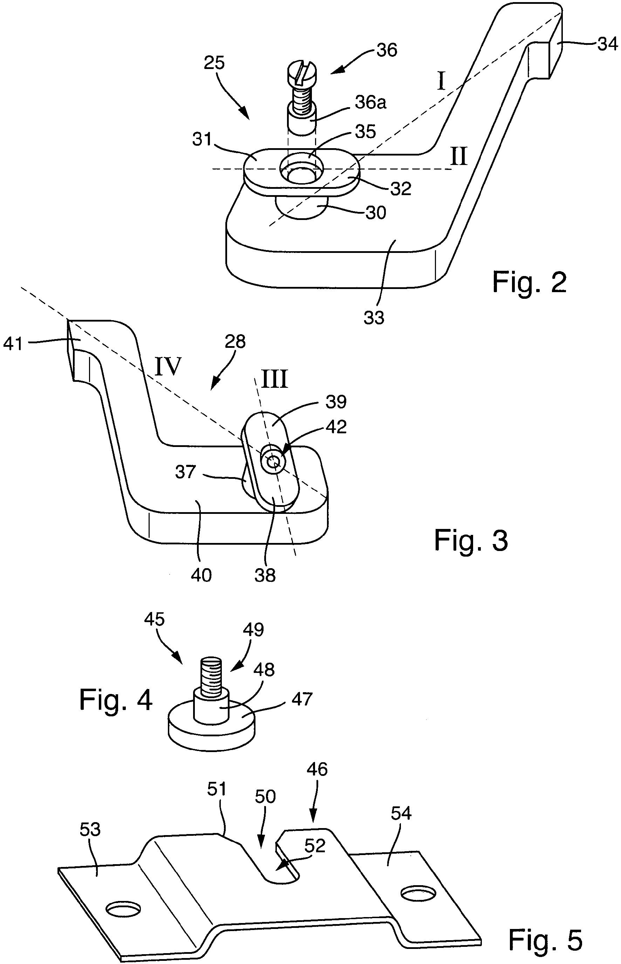

Der in Figur 2 gesondert veranschaulichte Drehanker 25 weist zwei von einer Nabe 30 diametral in Radialrichtung abstehende Flügel 31, 32 auf, die zusammen ein Sperrglied mit ovalem Umriss oder auch mit einem anderen geeigneten Umriss festlegen können. Die Nabe 30 ist drehfest mit einem Hebel 33 verbunden, der bei dem Drehanker 25 gleich wie die Flügel 31, 32 orientiert ist. Der Hebel 33 weist eine Biegung von zum Beispiel 90° auf und geht in einen Griff 34 über. Der Griff 34 und die Nabe 30 bilden dabei eine Linie, die in einem Winkel, beispielsweise einem 45° Winkel, zu einer von den beiden Flügeln 31, 32 festgelegten Linie steht. Die beiden Linien I, II sind in Figur 2 gestrichelt angedeutet.

Die Nabe 30 und der Hebel 33 weisen eine zentrale Öffnung 35 auf, die zur Aufnahme einer Befestigungsschraube 36 zur schwenkbaren Lagerung des Drehankers 25 an dem Boden 13 des Geräts 10 dient. Der Boden 13 weist dazu ein entsprechendes Gewindeloch auf, in das die Befestigungsschraube 36 einschraubbar ist, um den Drehanker 25 schwenkbar an dem Gerät 10 zu lagern. Die Befestigungsschraube 36 kann eine Passschraube oder eine mit einer Hülse 36a versehene Schraube 36 sein. Die Hülse 36a kann mittels einer Sicherungsscheibe auf der Schraube 36 verliersicher gehalten sein. Andere Mittel zur dreh- oder schwenkbaren Befestigung des Drehankers 25 an dem Boden 13 sind möglich.

Der zweite Drehanker 28 der zweiten Drehankerkupplung 21 unterscheidet sich von dem ersten Drehanker 25, wie aus Figur 3 und dem Vergleich zu der Figur 2 ersichtlich ist. Der zweite Drehanker 28 weist wie der erste Drehanker 25 eine Nabe 37 auf, von deren einem Ende sich zwei, ein Sperrglied bildende, Flügel 38, 39 in entgegengesetzten Radialrichtungen (Diametralrichtungen) weg erstrecken. Die beiden Flügel 38, 39 legen einen ovalen Umriss oder auch einen anderen unrunden Umriss fest. An das andere Ende der Nabe 37 schließt sich ein Hebel 40 an, der in einer gewissen Distanz zu der Nabe 37 abgewinkelt ist und in einen Griff 41 übergeht. Während der Hebel 33 links abbiegend ausgebildet ist und entsprechend einen 90° links gerichteten Knick aufweist, ist der Hebel 40 rechtsabbiegend ausgebildet und weist von der Nabe 37 aus gesehen, einen nach rechts abbiegenden Knick auf. Während die Flügel 31, 32 entsprechend der Linie II zunächst in Richtung des sich an die Nabe 30 anschließenden Teils des Hebels 33 orientiert sind, sind die Flügel 38, 39, deren Diametralrichtungen die Linie III festlegen, quer zu dem sich an die Nabe 37 anschließenden Teil des Hebels 40 orientiert. Der Griff 41 legt mit der Nabe 37 wiederum eine Linie IV fest, die mit der von den Flügeln 38, 39 definierten Linie III einen spitzen Winkel von beispielsweise 45° festlegt.

Auch der Drehanker 28 weist eine die Nabe 37 und den Hebel 40 durchsetzende Befestigungsöffnung 42 auf, die zur Aufnahme einer nicht weiter veranschaulichten Befestigungsschraube oder eines anderen Befestigungsmittels zur schwenkbaren Lagerung des Drehankers 28 an dem Boden 13 des Geräts 10 dient.

Die den Drehankern 25, 28 zugeordneten Ankerfassungen 26, 29 sind an der Oberseite 19 an Stellen angebracht, durch die die Drehachsen 24, 27 der Drehanker 25, 28 verlaufen. Die zum Beispiel als ovale Öffnungen ausgebildete Ankerfassungen 26, 29 stimmen mit den Orientierungen der Flügel 31, 32 bzw. 38, 39 der Drehanker 25, 28 überein, wenn diese in der in Figur 1 veranschaulichten Freigabeposition stehen. Wie ersichtlich sind die Längsorientierungen der ovalen Ankerfassungen 26, 29, um einen Winkel von beispielsweise 90° gegeneinander verdreht.

Bei einer in vielen Fällen vorteilhaften Ausführungsform gehört zu der Geräteverbindungseinrichtung 12 außerdem eine Einhängevorrichtung 44, die in einem Abstand sowohl zu der ersten Drehachse 24, wie auch in einem Abstand zu der zweiten Drehachse 27 angeordnet ist. Vorzugsweise sind die Einhängevorrichtung 44 und die Drehankerkupplungen 20, 21 in einer gemeinsamen Ebene angeordnet, die parallel zu dem Boden 13 und der Oberseite 19 angeordnet ist.

Die Einhängevorrichtung 44 umfasst ein Einhängeglied 45, wie es aus Figur 4 beispielhaft ersichtlich ist. Und ein Aufnahmeglied 46, das beispielhaft in Figur 5 veranschaulicht ist. Das Einhängeglied kann beispielsweise als Schraube mit einem Kopf 47 ausgebildet sein, der sich von einem Schaft 48 weg erstreckt, der in einen Gewindeschaft 49 übergeht.

Das Aufnahmeglied 46 kann zum Beispiel als abgewinkeltes Blechteil ausgebildet werden, an dem eine Aufnahmegasse 50 als randoffene Ausnehmung vorgesehen ist, die einen Trichtereinführabschnitt 51 und eine Verriegelungsgasse 52 aufweist, die von parallelen Flanken begrenzt ist. Das geschlossene Ende der Aufnahmegasse 50 ist vorzugsweise zu der Mitte eines gedachten Dreiecks hin orientiert, dessen Ecken von der Einhängevorrichtung 44 und den Drehankerkupplungen 20, 21 gebildet sind.

Zu beiden Seiten des zentralen, die Aufnahmegasse 50 aufweisenden, Abschnitts können Befestigungsabschnitte 53, 54 vorgesehen sein, mittels derer der zentrale, die Aufnahmegasse 50 aufweisende Teil des Aufnahmeglieds 46 in einem Abstand zu dem jeweiligen Träger, zum Beispiel der Oberseite 19 des Geräts 11 gehalten ist, der zur Aufnahme des Kopfs 47 ausreicht.

Es ist möglich, das Einhängeglied 45 an dem Boden 13 und das Aufnahmeglied 46 an der Oberseite 19 anzuordnen, wie es in Figur 1 veranschaulicht ist. Es ist jedoch ebenso gut möglich, die Zuordnung umzukehren und das Einhängeglied 45 an der Oberseite 19 und das Aufnahmeglied 46 an den Boden 13 anzuordnen. In diesem, letzteren Fall ist es vorteilhaft, das Aufnahmeglied 46 umgekehrt zu montieren, so dass der Trichtereinführabschnitt 51 zu der Mitte des gedachten Dreiecks hin orientiert ist, dessen Ecken von der Einhängevorrichtung 44 und den Drehankerkupplungen 20, 21 gebildet sind.

Während die Höhe des in den Boden 13 oder die Oberseite 19 eingeschraubten Einhängeglieds 45, wie auch die Höhe des Aufnahmeglieds 46 vorzugsweise geringer ist als die Höhe der Gerätefüße 17, 18 ist die Höhe der Drehanker 25, 28 vorzugsweise größer als die Höhe der Gerätefüße 15, 16. Damit finden die aus den Flügeln 31, 32, 38, 39 gebildeten Sperrglieder in die durch die Öffnungen der Ankerfassungen 26, 29 gebildeten Sperrgliedaufnahmen, wenn das Gerät 10 auf das Gerät 11 aufgesetzt wird.

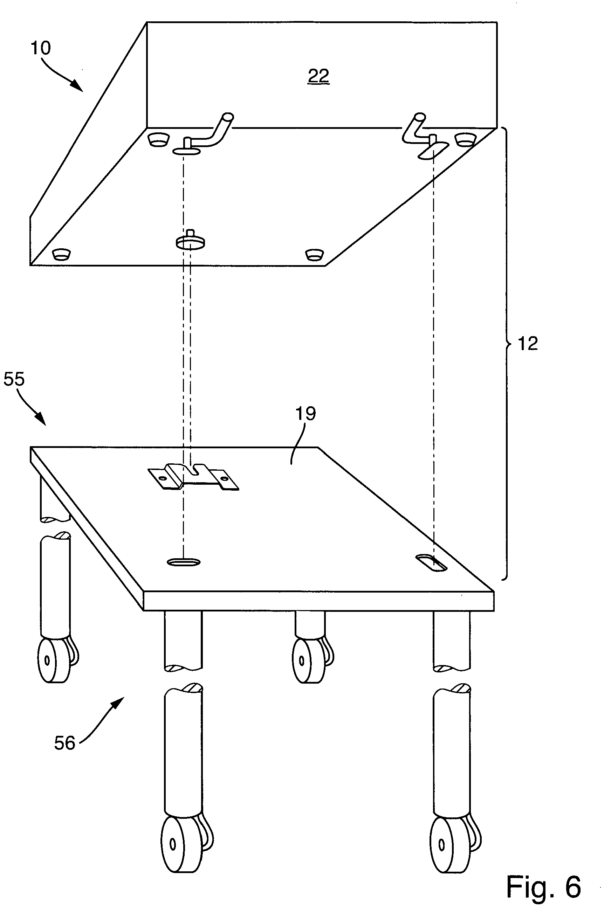

Während bei der zu den Figuren 1 bis 5 gehörigen Beschreibung davon ausgegangen wird, dass die Geräteverbindungseinrichtung 12 zwei Geräte 10, 11 miteinander verbindet, kann die Geräteverbindungseinrichtung 12 auch dafür vorgesehen sein, ein Gerät, wie beispielsweise das Gerät 10, mit einem Geräteträger 55 nach Figur 6 zu verbinden. Der Geräteträger 55 besteht aus einem beispielsweise fahrbar ausgebildeten Gestell 56, dessen Oberseite 19 mit der Oberseite 19 des Geräts 11 übereinstimmt. Entsprechend gelten die Ausführungen zu der Geräteverbindungseinrichtung 12 und deren Elementen wie auch die vorigen Ausführungen zur Gestaltung der Elemente an und auf der Oberseite 19 des Geräts 11 für die Oberseite 19 des Geräteträgers 55 entsprechend.

Die insoweit beschriebene Geräteverbindungseinrichtung funktioniert wie folgt:
Es wird davon ausgegangen, dass das Gerät 10 an dem Gerät 11 zu befestigen ist. Es wird dabei zunächst, wie etwa in Figur 1 dargestellt, auf die Oberseite 19 des Geräts 11 etwas nach hinten (in die Zeichenebene Hinein) versetzt aufgesetzt, so dass das Einhängeglied 45, insbesondere der Kopf 47, in gerader Verlängerung der Aufnahmegasse 50 in Nachbarschaft zu dieser steht. Dabei setzen die Gerätefüße 17, 18 und die Drehkupplungen 25, 28 auf der Oberseite 19 auf. Wird das Gerät 10 nun an den vor den Rückseiten 22, 23 der Geräte 10, 11 stehenden Benutzer herangezogen, fährt der Schaft 48 in die Aufnahmegasse 50 ein, womit die Einhängevorrichtung 44 kuppelt, d.h. in Eingriff steht, und die Geräte 10, 11 schon vorläufig aneinander gesichert sind.

Sobald der Schaft 48 vollständig in die Aufnahmegasse 50 eingefahren ist, fallen die von den Flügeln 31, 32, 38, 39 gebildeten Sperrglieder in die ovalen Öffnungen der Ankerfassungen 26, 29 ein. Der Benutzer kann nun die beiden Griffe 34, 41 voneinander weg bewegen, wobei die Drehanker 25, 28 um etwa 90° drehen. Dadurch erfolgt eine formschlüssige Verriegelung der Drehanker 25, 28 in den Ankeraufnahmen 26, 29. Die Geräte 10, 11 sind somit aneinander gesichert.

Die Demontage erfolgt in umgekehrter Betätigungsreihenfolge und kann somit wie schon die Montage werkzeuglos erfolgen.

Die Montage und Demontage des Geräts 10 auf dem Geräteträger 55 erfolgt entsprechend. In beiden Fällen gilt auch, dass es nicht zwingend auf eine gegensinnige Drehung der Drehanker 25, 28 ankommt. Es ist auch möglich, die beiden Hebel 33, 40 der Drehanker 25, 28 gleichsinnig abgewinkelt, zum Beispiel rechts abgewinkelt oder links abgewinkelt auszubilden. Die Verriegelungsbewegungen der beiden Drehanker 25, 28 erfolgen dann gleichsinnig. Ebenso erfolgen die Entriegelungsbewegungen in gleichsinniger aber entgegengesetzter Drehung.

Eine erfindungsgemäße Verbindungseinrichtung 12 dient zur Kopplung zweier übereinander anzuordnenden Geräte 10, 11 oder zur Kopplung eines Geräts 10 mit einem Geräteträger 55. Die Geräteverbindungseinrichtung 12 umfasst wenigstens zwei Kupplungsmittel, nämlich die zwei Drehankerkupplungen 20, 21. Bevorzugt ist eine Ausführung mit drei Kupplungsmitteln, bei der die beiden Drehankerkupplungen um eine Einhängevorrichtung 44 ergänzt sind, die vorzugsweise in einer horizontalen oder in einer geneigten Ebene angeordnet sind. Die Einhängevorrichtung 44 arbeitet nach dem Prinzip Haken/Öse, während die Drehankerkupplungen 20, 21 eine formschlüssige Verriegelung erbringen, indem ein unrunder Drehanker 25, 28 in eine Ankerfassung 26, 29 axial eingeführt und durch Drehung gesichert wird. Diese Verbindung ist einfach herzustellen und zu lösen und außerdem sehr erschütterungsfest.

### Bezugszeichen:

- 10: erstes medizinisches Gerät
- 11: zweites medizinisches Gerät
- 12: Geräteverbindungseinrichtung
- 13: Boden
- 15 - 18: Gerätefüße
- 19: Oberseite
- 20: erste Drehankerkupplung
- 21: zweite Drehankerkupplung
- L: Linie, die die Drehankerkupplungen 20, 21 verbindet
- 22: Rückseite des Geräts 10
- 23: Rückseite des Geräts 11
- 24: erste Achse
- 25: erster Drehanker
- 26: erste Drehankerfassung
- 27: zweite Achse
- 28: zweiter Drehanker
- 29: zweite Drehankerfassung
- 30: Nabe
- 31, 32: Flügel
- 33: Hebel
- 34: Griff
- I, II: Linien
- 35: Öffnung
- 36: Befestigungsschraube
- 36a: Hülse
- 37: Nabe
- 38, 39: Flügel
- 40: Hebel
- 41: Griff
- III, IV: Linien
- 42: Öffnung
- 44: Einhängevorrichtung
- 45: Einhängeglied
- 46: Aufnahmeglied
- 47: Kopf
- 48: Schaft
- 49: Gewindeschaft
- 50: Aufnahmegasse
- 51: Einführabschnitt
- 52: Verriegelungsgasse
- 53, 54: Befestigungsabschnitte
- 55: Geräteträger
- 56: Gestell

## Patentansprüche

1. Geräteverbindungseinrichtung (12), insbesondere zur Verbindung elektromedizinischer Geräte,
mit einer ersten Drehankerkupplung (20), die einen um eine erste Achse (24) drehbaren ersten Drehanker (25) und eine erste Ankerfassung (26) aufweist, in der der erste Drehanker (25) verankerbar ist,
mit einer zweiten Drehankerkupplung (21), die einen um eine zweite Achse (27) drehbaren zweiten Drehanker (28) und eine zweite Ankerfassung (29) aufweist, in der der zweite Drehanker (28) verankerbar ist,
wobei die erste Achse (24) und die zweite Achse (27) parallel und in einem Abstand zueinander angeordnet sind.

2. Geräteverbindungseinrichtung nach Anspruch 1, **dadurch gekennzeichnet, dass** sie eine Einhängevorrichtung (44) aufweist, die in Abständen zu der ersten Drehankerkupplung (20) und der zweiten Drehankerkupplung (21) angeordnet ist.

3. Geräteverbindungseinrichtung nach einem der vorstehenden Ansprüche, **dadurch gekennzeichnet, dass** der erste Drehanker (25) mit einem ersten Schwenkhebel (33) verbunden ist, der einen ersten Griff (34) zur manuellen Drehung des ersten Drehankers (25) aufweist und dass der zweite Drehanker (28) mit einem zweiten Schwenkhebel (40) verbunden ist, der einen zweiten Griff (41) zur manuellen Drehung des zweiten Drehankers (28) aufweist.

4. Geräteverbindungseinrichtung nach einem der vorstehenden Ansprüche, **dadurch gekennzeichnet, dass** die beiden Drehanker (25, 28) zwischen einer Verriegelungsposition und einer Freigabeposition drehbar sind.

5. Geräteverbindungseinrichtung nach Anspruch 4, **dadurch gekennzeichnet, dass** die Verriegelungsposition und die Freigabeposition um eine Vierteldrehung voneinander beabstandet angeordnet sind.

6. Geräteverbindungseinrichtung nach einem der vorstehenden Ansprüche, **dadurch gekennzeichnet, dass** die beiden Schwenkhebel (33, 40) an den Drehankern (25, 28) derart ausgerichtet sind, dass sie in Freigabeposition jeweils parallel zueinander orientierte Abschnitte aufweisen.

7. Geräteverbindungseinrichtung nach einem der vorstehenden Ansprüche, **dadurch gekennzeichnet, dass** die beiden Schwenkhebel (33, 40) an den Drehankern (25, 28) derart ausgerichtet sind, dass sie in Verriegelungsposition parallel oder antiparallel zueinander orientierte Abschnitte aufweisen.

8. Geräteverbindungseinrichtung nach einem der vorstehenden Ansprüche, **dadurch gekennzeichnet, dass** der erste Drehanker (25) ein erstes Sperrglied (31-32) und der zweite Drehanker (28) ein zweites Sperrglied (38-39) aufweisen, wobei die Sperrglieder (31-32, 38-39) jeweils zwei radial von einer Nabe (30, 37) abstehende Flügel (31, 32, 38, 39) aufweisen.

9. Geräteverbindungseinrichtung nach Anspruch 8, **dadurch gekennzeichnet, dass** die Flügel (31, 32) des ersten Sperrglieds (31-32) in Verriegelungsstellung gegen die Flügel (38, 39) des zweiten Sperrglieds (38-39) um einen Winkel verdreht angeordnet sind.

10. Geräteverbindungseinrichtung nach einem der vorstehenden Ansprüche, **dadurch gekennzeichnet, dass** die erste Ankerfassung (26) eine erste Sperrgliedaufnahme mit einer nichtkreisförmigen Öffnung aufweist und dass die zweite Ankerfassung (29) eine zweite Sperrgliedaufnahme mit einer nichtkreisförmigen Öffnung aufweist.

11. Geräteverbindungseinrichtung nach Anspruch 10, **dadurch gekennzeichnet, dass** die zweite nichtkreisförmige Öffnung um einen Winkel um die zweite Achse (27) gegen die erste nichtkreisförmige Öffnung verdreht ist.

12. Geräteverbindungseinrichtung nach einem der Ansprüche 2-11, **dadurch gekennzeichnet, dass** die Einhängeeinrichtung (44) ein Einhängeglied (45) und ein Aufnahmeglied (46) umfasst, wobei das Aufnahmeglied (46) eine Aufnahmegasse (50) aufweist, die von einer die Drehankerkupplungen (20, 21) verbindenden Linie (L) weg orientiert ist, und dass die Aufnahmegasse (50) einen Abschnitt mit einer Weite aufweist, die geringer ist, als eine Breite des Einhängegliedes (45).

13. Gerät (10) mit einem Boden (13), an dem
ein erster Drehanker (25), der um eine erste Achse (24) drehbar ist,
ein zweiter Drehanker (28), der um eine zweite Achse (27) drehbar ist, die zu der ersten Achse (24) parallel und in einem Abstand zu dieser angeordnet ist, und
ein Einhängeglied (45) oder ein Aufnahmeglied (46) aufweist, das in Abständen zu dem ersten Drehanker (25) und dem zweiten Drehanker (28) angeordnet ist.

14. Gerät nach Anspruch 13, **dadurch gekennzeichnet, dass** die Drehanker (25, 28) und das Einhänge- oder Aufnahmeglied (45, 46) in einem Dreieck angeordnet sind.

15. Geräteträger (55) oder Gerät (11) mit einer Oberseite (19), an der
eine erste Ankerfassung (26) und eine zweite Ankerfassung (29) vorgesehen sind, die zueinander in einem Abstand angeordnet sind, und an der
ein Einhängeglied (45) oder ein Aufnahmeglied (46) vorgesehen ist, das in Abständen zu der ersten Ankerfassung (26) und der zweiten Ankerfassung (29) angeordnet ist.
